# EUROPEAN PATENT APPLICATION

(11) **EP 2 709 045 A1**
(43) Date of publication of application: **19.03.2014**
(21) Application number: 12184229.8
(22) Date of filing: 13.09.2012
(51) Int. Cl.: G06Q 10/02

(54) **System and method for hotel reservation and for automated check-in**

(71) Applicant: Coussement, Marc, 8510 Marke (BE); Brokken, Pierre, 9506 Geraardsbergen (BE)
(72) Inventor: Coussement, Marc, 8510 Marke (BE); Brokken, Pierre, 9506 Geraardsbergen (BE)
(74) Representative: Hertoghe, Kris Angèle Louisa

(57) **Abstract**

A system (1) for making a hotel reservation and for automatic check-in, comprising:
- a host server (24) with databases (25) for storing user data and biometric data of a guest (5), and adapted for allowing the guest (5) to select a hotel (7) and to make a reservation, and adapted for transmitting the user and biometric data to a hotel server (33);
- the hotel server (33) adapted for receiving the lodging reservation and the user data and biometric data, and for transmitting it to a kiosk (4);
- the kiosk (4) comprising a kiosk database (41) for storing the user data and biometric data, and a biometric identification module (42), and means for assigning a room, and a key dispenser module (43) for providing a key (61), and a guest categorization engine (48) and an information selection and presentation engine (47) to present highly personalized information, and optionally a review writer module (26) integrated in the system (1).

A corresponding method is also claimed.

## Description

### Field of the invention

The present invention relates to the field of systems and methods for allowing a guest to make a lodging reservation for staying during a selected period in a lodging facility, and for automated check-in. In particular, the invention relates to such systems and methods for automatically assigning a room, for automatically providing a key of the assigned room to the user, and for automatically providing user personalized information.

### Background of the invention

Finding a suitable hotel may be time consuming. About 25 years ago, when internet was not commonly used yet, it was difficult to find any hotel in a far-away city, unless one happened to have a telephone number or fax number of a specific hotel. Alternatively, one could use a travel agency. When internet became popular, practically every hotel started to provide its own website. This changed the problem from "finding a hotel" to "selecting a hotel", making it time-consuming to select the most suitable hotel.

Also the next step, checking-in when arriving at the hotel is time consuming. In addition, it is also unsafe, as another person might get access to your room when using a false identity. The latter problem is addressed a.o. in US2009299777A1, describing a hotel reservation system comprising hotel rooms having combination locks electronically set so as to be openable by any one of a plurality of combination codes whenever the combination code is inputted.

Finally, when arriving at the hotel, the guest is typically poorly informed about any opportunities in his area of interest. Typically, in the hotel lobby, there are racks of folders, where the guest can select from, or there are posters to the walls, visible to everyone, but the guest still has to select relevant information, which is again time-consuming.

As can be seen, there is a need to find other ways to make hotel reservation and check-in, and getting access to relevant information more convenient.

### Summary of the invention

It is an object of embodiments of the present invention to provide a good method and a good system for making a lodging reservation, and for improved check-in.

In particular, it is an object of embodiments of the present invention to provide a more efficient method and system for a traveller to make lodging reservations, and to provide a room, and to control access to that room.

This objective is accomplished by a method and system according to embodiments of the present invention.

In a first aspect of the present invention, a system is provided for allowing a guest to make a lodging reservation for staying during a selected period in a lodging facility, and for automatically assigning a room and providing a key to the assigned room, and for automatically providing personalized information, the system comprising:
- a host server adapted to host a web-site for allowing the guest to create an account, and adapted for receiving user data and biometric data from the guest, and comprising a first database for storing the user data, and a second database for storing the biometric data of the guest, the host server being adapted for allowing a user with a pre-stored account, to select a hotel, and to make a lodging reservation in that hotel for the selected period thereby creating reservation data, the host server being adapted for transmitting the reservation data to a hotel management server of the selected hotel, and for transmitting the user data and the biometric data of the guest to a kiosk connected to the hotel management server;
- the kiosk comprising a kiosk database for storing the user data and the biometric data of the guest, and comprising an identification module for capturing biometric identification data, and comprising a processor adapted with a program for finding a match between the captured biometric identification data and the biometric data of one of the guests stored in the kiosk database, and for selecting a room number corresponding to the guest's reservation, and comprising a key dispenser module for providing a key of the selected room;
- the kiosk further comprising a guest categorization engine for determining a guest category for the identified guest, based on his user data and his reservation data;
- the kiosk further comprising an information selection and presentation engine for selecting and presenting information to the identified guest, based upon the determined guest categorization.

The hotel server may be part of the system, or not.

It is an advantage of a system according to embodiments of the present invention that it tries to reduce, e.g. minimize, the overall time consumption in an integral manner, while existing solutions try to reduce either the time to find / select a hotel, or to reduce time by automatic check-in, but not a combination.

It is an advantage that the biometric data is stored on a central host server, and is available for all registered partners (e.g. hotels or hotel chains). It is an advantage of such a system that a guest, if he is a frequent traveller needs to provide his user data and biometric data only once (e.g. when making an account on the host server), instead of having to provide this data to each hotel (or hotel chain) separately, when making a new reservation. It suffices e.g. that the frequent traveller logs-in in the host-server, (e.g. by using his/her user-ID and password), and then simply moves on to hotel selection, without having to provide again information such as name, address, date of birth, etc. After he/she has chosen an hotel, and made a reservation, the host server fetches the corresponding user data and biometric data from its database, and sends it to the selected lodging facility, along with the reservation data.

It is an advantage of such a system that it provides automatic check-in functionality. This may save costs to the hotel (or hotel chain) for not having to constantly staff the front-desk, for receiving and providing keys, even late at night. In addition, this may save considerable time to the frequent traveller, for not having to line-up at the front desk when arriving at the hotel. Instead, he/she can simply move to the (at least one) kiosk, which is aware of his/her coming, and which can immediately identify the person (using the biometric data), and assign a room, and provide a key to the room.

It is an advantage of using biometric data for identifying a guest at check-in, that the guest does not need to search his/her identity-card, and/or bank-card, and/or printed reservation papers, which may not be easy to find after a long trip, thus increasing user convenience. It is an advantage of using biometric data for identifying a guest, e.g. the father or mother of a family with children going to the beach, that no identity-card, and/or bank-card, and/or other value papers need to be taken to the beach, where they might be stolen, or which prevent the person from going into the sea, while still being able to re-gain access to their room.

It is an advantage of using biometric data that the identity of the person requesting access to the room, is verified. This prevents other people from gaining unwarranted access to the room by using a false name or false identity papers.

It is an advantage of this system that it requires only minor changes to an existing hotel infrastructure, in particular it does not require the existing door locks to be replaced, since the "key dispenser module" may be adapted for providing any kind of key, e.g. metal keys, or magnetic key cards. This is a huge benefit, because in this way huge investment costs for replacing all the locks can be avoided.

It is an advantage of this system that the host server can cooperate with a wide variety of hotel management systems (also known as CRM systems). On the one extreme, the functionality of selecting a hotel or hotel chain, and/or selecting a room-category in that hotel, by showing pictures and providing price-information etc, may be implemented completely in the host server. This may be a suitable configuration e.g. for connecting to a low-end hotel management systems not having a proper on-line reservation system. On the other extreme, the functionality of selecting a hotel (or hotel chain) may be implemented in the host server, but thereafter, the user is linked to the hotel management system of that hotel (or hotel chain) for selection of a room-category. The latter may be useful for hotels having already a proper on-line booking system. In the system of the present invention, the functionality of existing hotel management systems can either be fully exploited, and/or replaced by or complemented with extra functionality implemented on the host server, depending on the needs of the particular hotel management system.

It is an advantage of using the host server as an interface to a wide variety of different hotels and hotel management systems, in that a single user-interface may be used, which is familiar to the user. This user interface may take into account user preferences, such as e.g. language, currency, etc.

It is an advantage of this system that the automatic check-in can still be supplemented by person-assisted check-in at the front-desk, if so desired. Thus, a guest who does not wish to use the automatic check-in system, may still go to the front-desk, where he/she will be checked-in manually into the hotel server system, and may be assigned a room manually. After check-in, the person may or may not use the kiosk for retrieving the key to the room.

It is an advantage that the host server communicates to the kiosk directly, not via the hotel management system. This offers the advantage that existing hotel servers need not be adapted. In some embodiments the kiosk can work fully autonomously (including e.g. assigning room numbers to the guests), while in other embodiments minimal interaction is required with the hotel server (e.g. for receiving an available room number). This also offers the advantage that the host server software and the kiosk server software can be better tuned to each other, and may considerably simplify upgrading, without interfering with the hotel server. In this way, the hotel server and the kiosk may cooperate as a single subsystem for capturing data, and for sending it back to the (remote) host server.

This system in fact integrates an on-line hotel reservation system and a self-service kiosk and an information kiosk, controlling the entire chain end-to-end, albeit via the hotel management server. This not only combines the advantages of an on-line hotel reservation system, such as e.g. that one can pre-view the room and/or other facilities (e.g. restaurant, sauna, pool, golf track, etc), and the advantages of self check-in at a kiosk with a key dispenser, but it offers additional advantages, such as not having to provide the user data and/or other data (e.g. biometric data) again when one chooses another hotel (or hotel chain), this is transferred automatically. Another additional advantage may be that the host server can centrally store user preferences, such as e.g. the desire to visit museums, or to go to an opera, or to view horse races, or to practice sports, etc, and that the kiosk can automatically retrieve these preferences, and can provide suitable information to the user when he arrives at the kiosk, of such events and/or facilities in the vicinity of the hotel, if so desired.

Because the host server is linked to the kiosk, the behaviour of the host server and the behaviour of the kiosk can be tuned to one another. Because of this, the system is much more than simply the combination of a booking website (where a user is merely provided with information about a hotel, and can make a reservation), and a kiosk with a screen (showing general information, e.g. whether forecast, or local events such as a concert). Due to this linkage, the end-to-end system not only provides functionality for fast reservation, and fast check-in and fast check-out, with enhanced security (both for the hotel and for the guest because nobody else can enter the room), but at the same time the reservation-website and the kiosk can act as information capture tools, and at the same time both the website and the kiosk can act as smart and personalized information providing tools (e.g. a kind of "personal assistant") to the guest.

It is an advantage of the guest categorization engine, that the same guest can be categorized differently, depending on the circumstances of his reservation (e.g. alone or with his family), and/or depending on outside circumstances (e.g. weather prediction).

It is an advantage of the information selection and presentation engine to be able not only to personalize the welcome message as "Welcome Mr Smith", but to go much further in selecting relevant and highly personalized information, having a high degree of probable interest.

In an embodiment, the kiosk is adapted for assigning a room number when the guest arrives at the kiosk for the first time during the selected period, and for providing the same room number any subsequent time during the selected period.

It is an advantage of assigning a room to a specific guest only at the time when he actually arrives at the kiosk, as opposed to some prior art systems, where the room number is already assigned at the time of making the reservation. One of the advantages is that the kiosk can take better account of the rooms actually being available, e.g. in view of housekeeping. For example, the kiosk may offer a larger room (if larger rooms are still available, and unlikely to be reserved) to a (loyal) visitor, instead of simply the room he has reserved.

In an embodiment of the system, the kiosk is adapted for receiving a key disposed in the key dispenser module, and for identifying the person disposing the key by means of the identification module.

In this embodiment, the guest can also return the key to the room to the key dispenser. This may happen multiple times per day. The kiosk may use the identification of the person disposing the key, and may log this information for security reasons. In order to know which room-number the key is from, the kiosk may use the identification data of the person disposing the key. Alternatively or additionally, the kiosk may have scanning means to scan an inscription on the key (or an inscription on the key-holder), or in case of a magnetic or electronic card, the kiosk may read the room number from the card, etc. In this way, the user needs not enter the room-number in a digital keyboard for example, thus saving time.

It is an advantage of being able to leave a key in the hotel, that the key cannot be lost or stolen (so that other people may get access to the room), thus enhancing security. It is an advantage that the key need not be carried or stored in a pocket, which enhances user convenience.

In an embodiment of the system, the kiosk further comprises a printer module and a bank card reader, and is adapted for automatic check-out by printing a bill on the printer module, and for accepting payment via the bank card reader.

Automatic check-out offers the advantage of not having to line-up at the front-desk, thus again saving time for the traveller, and reducing staff requirements for the hotel.

In an embodiment of the system, the kiosk is further adapted for storing all biometric data captured by the identification module in the kiosk database.

It is an advantage that multiple biometric scans are taken from the same person, and stored in the database. This data may be used to take account of tolerances of equipment, or for other purposes (e.g. security reasons).

In an embodiment of the system, the host server further comprises a third database for maintaining via the host server a history log relating to a guest, the history log comprising at least one of the history of reservations made by the guest, the history of the guest's profile changes, the history of the guest's reservation options and/or preferences, the history of the guest's external reservations (e.g. for theatre, sports facilities, the zoo etc.).

It is an advantage of maintaining a history-log of reservations, such as e.g all reservations or a pre-determined number of the most recent reservations, made in a database connected to the host server. Preferably such data is not made available to other hotels, e.g. by making use of an encryption engine.

In an embodiment of the system, the kiosk is adapted for sending biometric data captured by the identification module to the host server, and wherein the host server is adapted for processing and/or storing the biometric data in the second database.

It is an advantage that all biometric data captured at the kiosk may be stored. Alternatively only some of the biometric data is stored (e.g. the most recent version of each day), while other data is deleted. By archiving not only the most recent version, but keeping regular updates is advantageous for security reasons, and for automatically keeping account of ageing of the person. For example, one version may be kept per day. In an embodiment the kiosk is adapted for calculating a kind of average image (e.g. an "average" facial image or an "average" fingerprint), or be adapted to extract certain parameters from the images, and determine a kind of average and/or spread on the parameters. This offers the advantage that the system can automatically take into account tolerances on different equipment. This data may also be taken into account for fine-tuning the "match" / "no-match" criterion.

In an embodiment, the kiosk further comprises an identity card reader module, and wherein the kiosk is further adapted for comparing the data read from the identity card to corresponding user data of the guest as stored in the kiosk database.

This can further increase the security, by further reducing the risk of false identification.

In an embodiment of the system, the guest categorization engine is adapted for determining the category to the guest based on a first set of functions, each function being a combination of mathematical and/or logical operations acted upon predetermined fields of the user data and/or the reservation data.

The predefined combination can be regarded as a function for determining the conditions under which the guest belongs to a particular category. It is an advantage of using such functions, that a much more sophisticated categorization can be applied to the guest, instead of only looking e.g. at a single field, such as e.g. "travelling alone, thus business traveller". In particular it allows that a different category be assigned to the same guest under different circumstances.

In an embodiment of the system, the hotel server further comprises a configuration tool for modifying the first set of functions.

It is an advantage of such configuration tool, that the hotel manager can adapt, modify, add, delete the guest categories, and can define corresponding sets of conditions ("functions") for evaluating if the guest satisfies those conditions.

In embodiments of the present invention, the configuration tool has a user-friendly graphical user interface, where Boolean and/or mathematical operations can be defined e.g. by simply "dragging and dropping" operator blocks.

In an embodiment of the system, the information selection and presentation engine is based a second set of functions for selecting information from available sources, each second set of functions being a combination of mathematical and/or logical operations acted upon predetermined fields of the user data and/or the reservation data, and based on the use of templates to organize the selected information on a screen.

It is an advantage of the information selection and presentation engine, that it can operate fully automatically, while being able to generate highly relevant and highly personalized information to the guest, by using the second set of functions.

It is an advantage of using templates that the complexity of displaying different kinds of information can be relatively easily managed. Yet, the same visual template may (and usually will) contain different information, even for two guests of the same category, because the actual content filled in the visual elements of the templates, may also depend on user preferences.

It is an advantage of using the second set of functions for defining a better selection of information, to find a better match between the guest and the hotel infrastructure or environment (e.g. a golf course or an amusement park) in or near the hotel, and/or specific events (e.g. an annual parade, or a specific concert), e.g. by performing logical and mathematical operations on fields of the user data and/or reservation data.

In an embodiment of the system, the hotel server further comprises a configuration tool for modifying the second set of functions.

It is an advantage of such configuration tool, that the hotel manager can adapt, modify, add, the templates, and be able to influence the content to be placed therein, depending on the specific infrastructure (e.g. if the hotel has a sauna, golf terrain, swimming pool, or not), and/or any special events (e.g. town parade, hairdresser advertisement, etc).

It is an advantage that the layout of the screen template can be dynamically modified by the hotel manager (or staff), e.g. to change the focus of some fields, depending on a higher probability of interest.

In embodiments of the present invention, this can be done by using a configuration tool with a graphical user interface, where the visible elements can be selected, arranged, sized etc by simple "drag and drop".

In an embodiment of the system, the kiosk further comprises a ticket dispenser module for providing entry tickets for an external facility.

With external facilities is meant, external to the hotel, e.g. a zoo, a hairdresser saloon, a theatre, etc. It is an advantage for the guest that the hotel not only provides information about out-of-house facilities and/or activities, but also that the kiosk can provide access tickets (e.g. entry-tickets for the zoo), so that again, the guest (and e.g. his wife and kids) can save time by not having to line-up at the entrance of the zoo, but can go directly to the automated gate, and thus save time. The hotel kiosk can also take care of payment, and may even provide a discount for hotel guests, e.g. to please the guest, and to increase customer binding.

In an embodiment of the system, the hotel database or the kiosk database further comprises an incident database for storing incident data, and wherein the hotel server is adapted for sending the incident data to the host server, and wherein the host server further comprises a review writer module adapted for allowing the guest to write a review about his stay in the hotel and adapted for assigning a trustworthiness score to the review written by the guest based on a predefined function of the incident data and/or reservation data.

It is an advantage of integrating the review writer module into the system, because in this way a trustworthiness score can be automatically calculated, so that the review can be published along with that trustworthiness score.

The above-described method embodiments of the present invention may be implemented in a processing system. One configuration of such processing system includes at least one programmable processor coupled to a memory subsystem that includes at least one form of memory, e.g., RAM, ROM, and so forth. It is to be noted that the processor or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem that has at least one disk drive and/or CD-ROM drive and/or DVD drive. Ports for inputting and outputting data also may be included. More elements such as network connections, interfaces to various devices, and so forth, may be included, but are not described here in detail. The various elements of the processing system may be coupled in various ways, including via a bus subsystem. The memory of the memory subsystem may at some time hold part or all of a set of instructions that when executed on the processing implement the steps of the method embodiments described herein. Thus, while a processing system in general is prior art, a system that includes the instructions to implement aspects of the methods for is not prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media include, for example, optical or magnetic disks, such as a storage device which is part of mass storage. Common forms of computer readable media include, a CD-ROM, a DVD, a flexible disk or floppy disk, a memory key, a tape, a flash disk, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

According to a second aspect of the present invention, a method is provided for allowing a guest to make a lodging reservation for staying in a lodging facility, during a selected period, and for automatically assigning a room, and for automatically providing a key to the assigned room during the selected period, the method comprising the following steps:
- providing a web-site hosted on a host server for allowing the guest to create an account on the host server, retrieving user data and biometric data from the guest, and storing the user data and the biometric data in a first resp. second database connected to the host server;
- arranging the web-site for allowing a guest with a pre-stored account, to select a hotel, and to make a lodging reservation in that hotel for the selected period;
- when a reservation is made, transmitting the user data and biometric data of the guest to a hotel management server of the selected hotel;
- the hotel management server receiving the lodging reservation;
- providing the user data and biometric data to at least one kiosk, the kiosk storing the user data and the biometric data of the guest in a kiosk database;
- the kiosk retrieving biometric identification data from an identification module when the guest arrives at the kiosk, and searching in the kiosk database for a guest whose biometric data matches the retrieved biometric data, and if a match is found, selecting a room number corresponding to the guest's reservation, and controlling a key dispenser module to provide a key to the assigned room;
- the kiosk determining a guest category for the identified guest based on his user data and his reservation data, and selecting and presenting information to the identified guest, based on the determined guest category.

In an embodiment of the method, selecting a room number corresponding to the guest's reservation comprises assigning a room number when the guest arrives at the kiosk for the first time during the selected period, and for providing the same room number any subsequent time during the selected period.

In an embodiment of the method, the kiosk receives a key disposed in the key dispenser module, and identifies the person disposing the key by means of the identification module.

In an embodiment of the method, the method further comprises the steps of printing a bill on a printer module connected to the kiosk (4), and accepting payment via a bank card reader connected to the kiosk.

In an embodiment of the method, the method further comprises the step of storing all biometric data captured by the identification module in the kiosk database.

In an embodiment of the method, the host server maintains a history log in a third database, the history log comprising at least one of the history of reservations made by the guest, the history of the guest's profile changes, the history of the guest's reservation options, the history of the guest's external reservations.

In an embodiment of the method, the kiosk sends biometric data captured by the identification module to the host server, and the host server processes and/or stores the biometric data in the second database.

In an embodiment of the method, the method further comprises the step of reading data from an identity card by means of an identity card reader module, and the step of comparing the data read from the identity card to corresponding user data of the guest as stored in the kiosk database.

In an embodiment of the method, the step of determining a guest category comprises evaluating a first set of functions, each function being a combination of mathematical and/or logical operations acted upon predetermined fields of the user data and/or the reservation data.

In an embodiment of the method, the method further comprises the step of modifying the first set of functions.

In an embodiment of the method, the step of selecting and presenting information comprises evaluating a second set of functions for selecting information from available sources, each second set of functions being a combination of mathematical and/or logical operations acted upon predetermined fields of the user data and/or the reservation data, and using templates to organize the selected information on a screen.

In an embodiment of the method, the method further comprises the step of modifying the second set of functions.

In an embodiment of the method, the method further comprises the step of dispensing an entry ticket for an external facility.

In an embodiment of the method, the method further comprises providing incident data, referring to problems of complaints the guest has during his/her stay, to the hotel database or the kiosk database, sending the incident data to the host server, allowing the guest to write a review about his/her stay in the hotel (during or after his/her stay) and assigning a trustworthiness score to the review written by the guest based on a predefined function of the incident data and/or reservation data. The trustworthiness score may for example take into account the fact that already during his/her stay in the hotel the guest notified the hotel staff of an incident, the fact that the guest did or did not accept a solution which was offered, etc.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic block-diagram of a system according to embodiments of the present invention.
FIG. 2 illustrates a process in accordance with embodiments of the present invention, where a new user creates an account, and how the user can write a satisfaction review.
FIG. 3 illustrates a process in accordance with embodiments of the present invention, where a user selects a hotel, and makes a reservation.
FIG. 4 illustrates the process of self-check-in in accordance with embodiments of the present invention.
FIG. 5 illustrates how a kiosk as used in embodiments of the present invention can be used as an efficient database marketing tool.
FIG. 6 shows a schematic block-diagram of an example of an information selection and presentation engine for generating relevant personalized information in accordance with embodiments of the present invention.
FIG. 7 illustrates the process of self check-out in accordance with embodiments of the present invention.

The drawings are only schematic and are non-limiting. In the drawings, the size of some of the elements may be exaggerated and not drawn on scale for illustrative purposes. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in the present document reference is made to "Online Travel Agency" or "OTA", reference is made to a website where a guest can make a hotel choice that fulfils certain selection criteria. This selection is generally done by using selection filters.

Where in the present document reference is made to "Hotel reservation system", reference is made to a computer system that is used in cooperation with the Online Travel Agency website in the progress and in the finalization of the reservation. This system can be arranged at several levels, e.g. Hotel, Hotel brand, Hotel chain. The generic term for this system is usually "Channel Management" system.

Where in the present document reference is made to "Guest profile database", reference is made to the combined database of the host server system. It holds information on individual hotel guests, including identification information, such as e.g. biometric data of the individual, history record of images of the guest facial look, personal information (e.g. age, address), credit card information, profile account password, passport photo, textual information as printed on the passport; and supplementary data, such as e.g. travel history, guest profile information. It may also hold medical data, e.g. medical insurance number, contact information of the family doctor, etc.

Where in the present document reference is made to "CRM" or "CRS", reference is made to a "Central Reservation System". This is the hotel (local) computer which is used for the management of the hotel, guest information, room availability, billing, etc.

Where in the present document reference is made to "Biometric identification", reference is made to any means for indentifying an individual trough a sample of biometric data, such as e.g. any form of facial recognition (e.g. 2D facial, or 3D facial, or stereo vision facial), Iris scan, fingerprint, voice recognition, etc.

Where in the present document reference is made to "Hotel room access", reference is made to any device or means that is used to give a guest access to his room depending on the technology used on the room lock system, such as e.g. a metal key, a plastic room card-key with e.g. a unique perforation pattern, any form of NFC device (near field communication) magnetic card, numeric or other code, any form of coded signal acoustic or other, etc.

Where in the present document reference is made to "General identification", reference is made to any form or means of automated identification that is not strictly related to an individual. As an example, the following means give no guarantee that the individual carrying it, is really the right individual: Credit card, document, barcode, password, any electronic device, mobile phone number, loyalty card or key - all these objects may be transferred to another person without anyone noticing.

Where in the present document reference is made to a "Kiosk", reference is made to a piece of equipment which is typically placed in the hotel lobby, and which has all necessary hardware and software features to help the guest in the process of check-in and/or check-out (also called self-check-in resp. self-check-out).

Where in the present document reference is made to a "Passport reader", reference is made to a device such as a scanner for reading any form of information printed on, or stored on (a microchip of) a passport. It may comprise an electronic card reader, or a visual scanner with optical character recognition (OCR) functionality for converting the text information printed on the passport, or with functionality to extract the photo printed on the passport or from the digital information on the passport, which may be used for comparison with data obtained from facial recognition.

Where in the present document reference is made to "Database marketing", marketing is meant which involves a two-way communication, as opposed to direct marketing, which implies only a one-way communication from the hotel to the guest.

Where in the present document, reference is made to "database marketing information", reference is made to marketing information specially customized to the guest derived from e.g. the guest profile, preferences such as e.g. room type, availability of a bar, health club, sauna, internet, parking, laundry, etc, but optionally also past stays at the hotel, past incidents and complaints, frequent guest status, time of arrival, locations, time period, etc.

Where in the present document, reference is made to "Up-sales", reference is made to additional in-house or out-house services the kiosk may present/offer/sell to the guest, by using the guest profile and database marketing information.

In this document, the terms "server" and "computer" are used as synonyms.

### HIGH LEVEL DESCRIPTION:

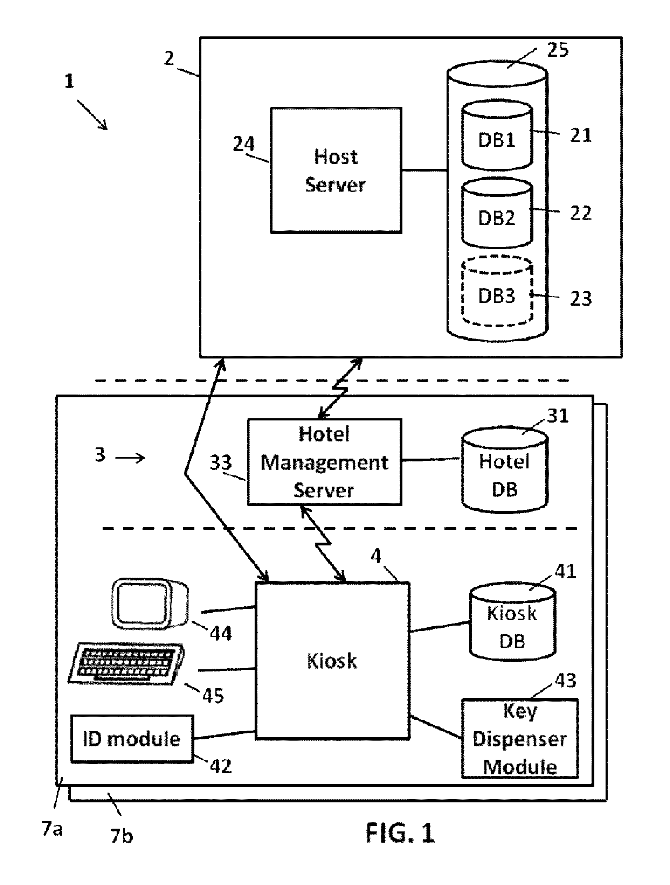

FIG. 1 shows an example of a block-diagram of an end-to-end-system 1 according to embodiments of the present invention. In terms of hardware, this system encompasses two major partitions, on the one hand: a host server system 2 comprising a host server 24 connected to a first database 21 for storing user data of a person, such as e.g. name, address, date and/or place of birth, telephone number, fax number, mobile number, credit-card-information, etc, and to a second database 22 for storing biometric data of the person, such as e.g. a (2D or 3D) facial photo, an iris scan, fingerprint data, voice parameters, etc, and optionally to a third database 23 for storing preferences such as e.g. language preference, room preferences, food preferences, etc., and history logs such as e.g. data about previous reservations, previous use of laundry facilities, previous use of bar facilities, previous use of wake-up calls, etc. The latter database 23 may be very useful for marketing purposes. Although the three databases 21, 22, 23 are shown as separate databases, two or all of them may also be integrated in a single database 25. The database 25 is further referred to as the "host server database", and it may comprise also further data as mentioned above.

An end user, e.g. a person desiring to use the system 1 for making a hotel reservation can connect to the host server 24 via a network (not shown), e.g. a fixed or mobile telephone network, LAN, WAN, internet, or any other kind of network known to the skilled person, configured for allowing connection between a fixed (e.g. laptop) or mobile device (e.g. mobile phone, smart-phone, etc.) and the host server 24.

The host server system 2 is connected or connectable, directly or indirectly to a plurality of hotel management servers 33, via telecommunication means on the hotel management servers 33, and on the host server 24. The hotel servers 33 may be part of the system 1, or not. Typically each hotel 7a, 7b or hotel chain has its own hotel management system 3 for managing information such as room availability and reservations. Typically each hotel (or hotel-chain) also has Customer Relation Management tools, known as "CRM software". Existing hotel management servers 33 may already have their own website for allowing people to make direct reservations, but according to aspects of the present invention, it is possible that the host server 24 takes over whole or part of this functionality. In that case, the host server 24 is linked to the customer relation management (CRM) software of the hotel server 33 for exchanging information such as room availability, price information, photos of rooms, discounts, and other information between the host server 24 and the hotel sever 33, via a network connection. Typically, via a configuration tool providing configurability, the look-and-feel of the host website running on the host server, and presenting each hotel (or hotel chain) can be customized. In this way, each hotel can choose its proper marketing strategy. By analyzing the guest's behaviour on the host website, e.g. making a log of websites visited during or shortly after the reservation process, the system may get better insight in the guest 5, even without having the user data of the particular itself. This information can be used during check-in later, e.g. for presenting events or facilities the guest 5 was searching for, and thus was interested in (e.g. opera, concerts, sports events, ...). During the guest's stay in the hotel 7, the kiosk 4 can become a "personal marketing system", as opposed to the wall posters or general information folders as used in classic hotels. The information provided at the kiosk 4 can thus be personalized, taking into account any data (e.g. preferences) of the guest database 25, but also additional information as may be obtained e.g. by monitoring his "browsing behaviour" or "click behaviour", or any questions he may have asked. In that way the information presented to the guest is not only personalized, but also particularly relevant for that particular stay. Such behaviour may also be monitored when searching for a suitable hotel, so as to discover the guest's likes and dislikes.

As for the providing of information, such as room pictures, during the hotel selection process, such pictures may be stored in the host server database 25, so that communication to and from the hotel server 33 itself can be reduced, and may be limited e.g. to checking only room availability, so that the computer resources in the hotel 7 can be limited, and a less-powerful hotel computer can suffice. The fact that a powerful network server is not required for the hotel computer 33 linked to the host server 24, may be an important advantage for a hotel or hotel-chain, in that it needs not invest in powerful computer infrastructure, since this functionality (during hotel-selection) can be offered by the host server 24 to the end customer (the potential hotel guest). The hotel computer 33 may of course also be used for storing other information, such as administrative data about the hotel staff / personnel, but that is not relevant for the present invention.

The hotel management server 33 is connected to a hotel database 31, where typically room availability is managed over a long period, taking into account check-in information, check-out information, and lodging reservations. The hotel management server 33 is also connectable or connected, e.g. wired or wireless to one or more kiosks 4, which may e.g. be located in the hotel lobby, or one on each hotel floor. The kiosk 4 may also be configured for communicating with the host server 24 without involvement of the hotel management server. This implies e.g. that each kiosk has its own IP-address. In this way, the host server 24 and the kiosk 4 form a subsystem, which can exchange information (such as user data, biometric data, etc), without interference or the help from the hotel server 33.

The kiosk(s) 4 comprise(s), or is (are) connected to its (their) own database 41, called the kiosk database 41, for storing "user data" and "biometric data" of guests. Like the host server database 25, the kiosk database 41 may be a single database, or may comprises several databases (not shown). It is to be noted that, in principle, the kiosk database 41 only needs to store guest information for one particular day, and may be updated daily, but other update-schemes may also be used. For the present invention, it is assumed that the kiosk database 41 holds at least the "user data" and "biometric data" of all guests which are staying in the hotel, or are expected to arrive on a particular day.

Specific for the present invention is also that the kiosk 4 further comprises an identification module 42, in particular a biometric identification module, for ensuring that the person at the kiosk 4 corresponds to the biometric data sent along with the hotel reservation. This enhances the security in that no other person can get access to the room, even if he/she has e.g. stolen the identity card (passport) of the legitimate guest. The biometric identification module 42 may e.g. be an iris scanner, or a camera for taking a facial picture, or an apparatus for taking fingerprint data, etc. Optionally, the kiosk 4 may also have non-biometric identification modules, such as e.g. a passport reader, a bank-card-reader, etc. Optionally the kiosk 4 may also have a numerical or alpha-numerical input device, such as e.g. a keyboard 45, or a touch-screen device (not shown), and a screen 44 for displaying information to the guest 5. Optionally the kiosk 4 may also have a printer module for printing information such as billing information, and/or for printing other interesting information such as e.g. a local street map, a list of museums in the city, etc.

### OVERVIEW

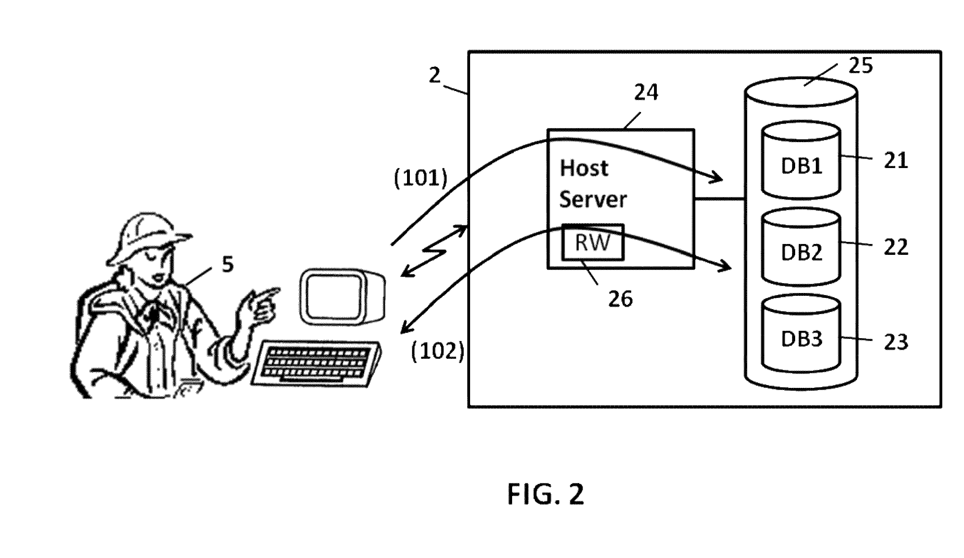

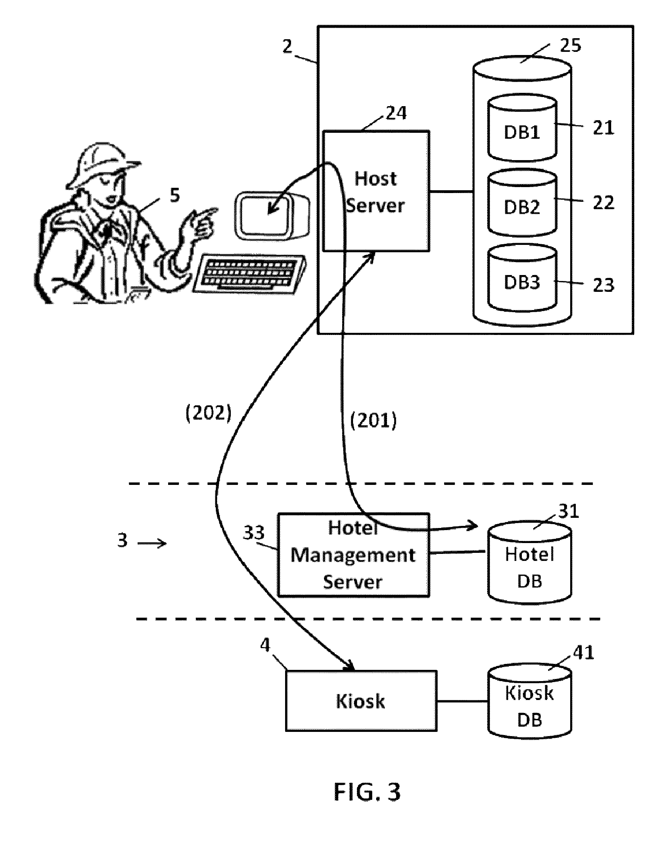

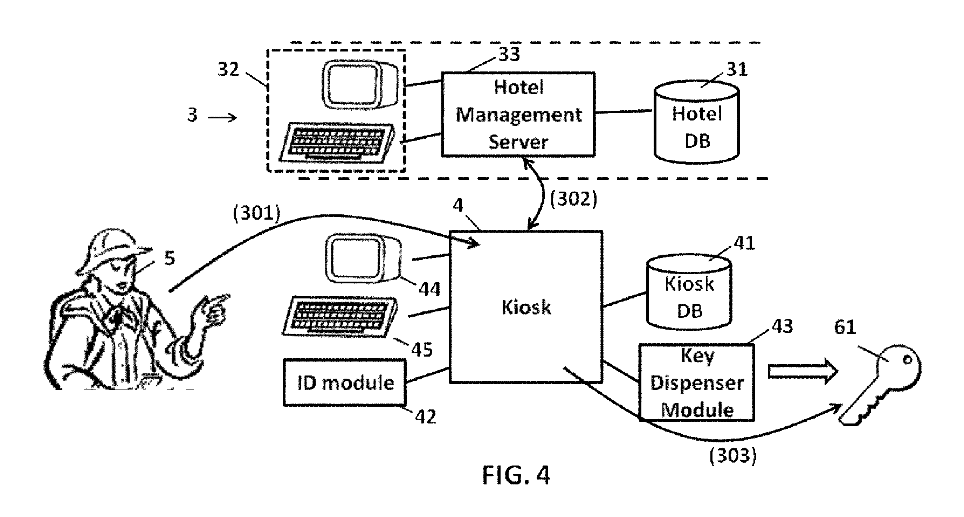

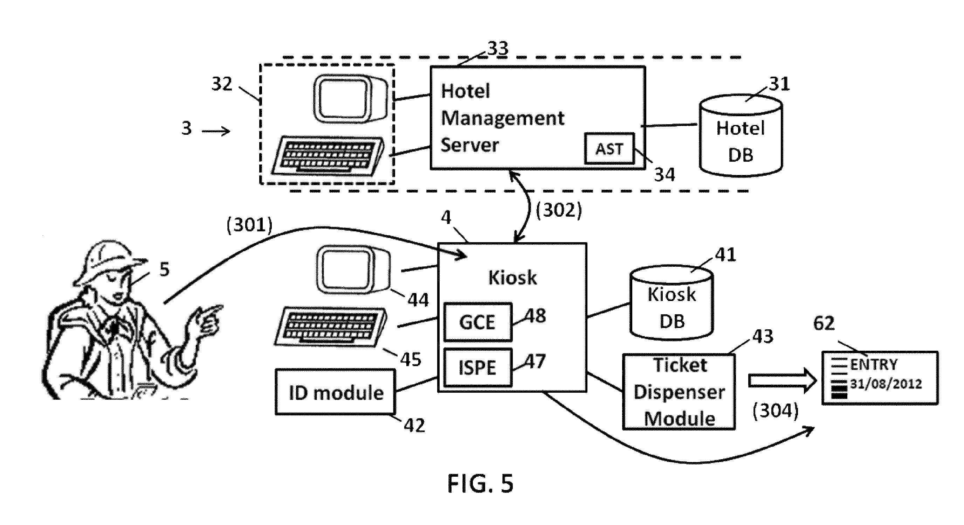

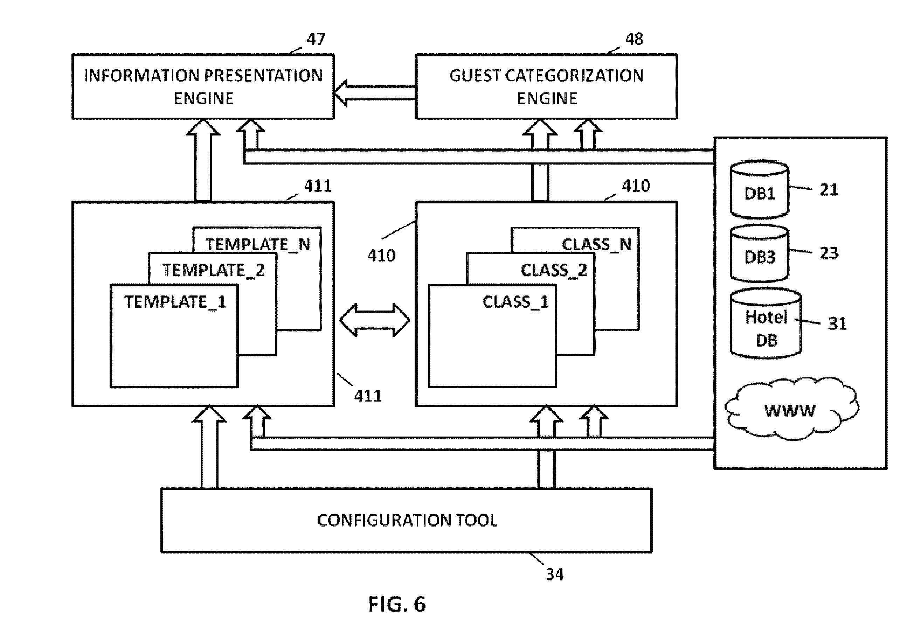

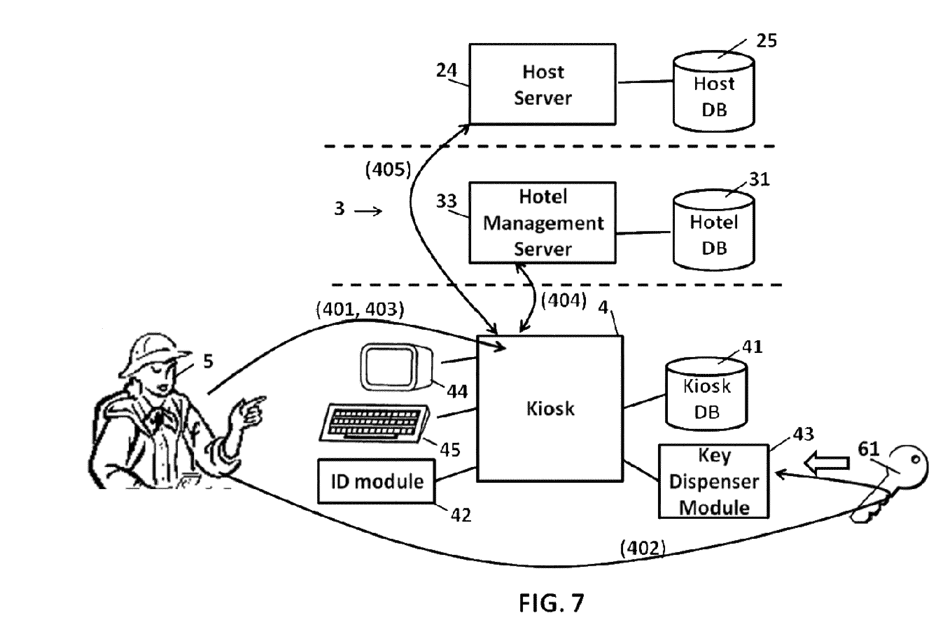

This system 1 of FIG. 1 determines the main aspects of the process of the pre-encounter, encounter and post-encounter stage between the guest 5 and a hotel facility 7. Before a person can use the system 1, he/she should create an account, as will be explained in relation to FIG. 2. Once an account is created, he/she can select a hotel facility, and make a reservation, as will be explained in relation to FIG. 3. When arriving at the selected hotel 7, the person (further called guest) 5 can check-in at the kiosk 4, where he/she is indentified by means of his/her biometric data. After identification by the kiosk 4, the guest 5 is automatically assigned a room, and he/she can automatically get a key 7 to that room, without having to wait at the front-desk (or reception), as will be further explained in relation to FIG. 4. FIG. 5 shows how the kiosk can also be efficiently used for providing highly relevant personalized information to the guest 5, by means of an information selection and presentation engine 47 running on the kiosk 4. FIG. 6 is a schematic block-diagram of an example illustrating how the information selection and presentation engine works, which data it uses, and how it can be configured. FIG. 7 will illustrate the automatic check-out process. During check-out, or after the stay in the hotel 7, the guest 5 can optionally write a customer satisfaction review, as shown in FIG. 2.

### CREATING AN ACCOUNT:

FIG. 2 illustrates how a new user can create an account on the host server 24, for being able to use the system 1. In the example of FIG. 2, a person 5 logs-in on a particular website, and chooses e.g. a login-ID and a password, and provides user data, such as e.g. name, surname, address, credit card number, etc. Then the person may provide profile information and should allow biometric data to be transmitted to the relevant database 22 of the host server 24, as indicated by arrow 101. The profile information may be preferences, which may be used for marketing purposes, and which may e.g. be obtained by means of a questionnaire. The amount of information gathered depends on how much information the person is willing to give, e.g. age, education, profession, marital status, number of children, hobbies, sports, leisure, religion, cultural interests, etc. The biometric data may be captured by using a "biometric data capture device", such as e.g. a PC webcam coupled to a computer. The biometric data may be a live sequence of facial image data, and the server may be adapted for verifying that the live stream is captured from a real person rather than from a photograph held in front of the camera. It is noted that biometric data may also have been captured beforehand, in which case it is only transmitted. The account can also be created for a user during a previous stay at a lodging facility, i.e. a stay during which self-check-in was not yet available in view of lack of login data in the host server database 25. Anyway, the host server 24 stores the user data in a first database 21, and stores the biometric information in a second database 22, for later use. The whole of the databases 21, 22, 23 is also referred to as the "Guest profile database". Once an account is created, the guest 5 can use the system 1 for making hotel reservations.

### MAKING A RESERVATION:

FIG. 3 illustrates the process where a person 5 selects a hotel 7, and makes a reservation. After an account is created (as described above), the guest 5 can use an OTA-type (Online Travel Agency) exclusive web-based platform to select the hotel 7a of his choice. The user 5 can perform his/her search in the database of possible hotels 7a, 7b by means of selection filters (e.g. based on location information, price categories, availability of certain in-house facilities such as e.g. sauna, etc). The guest 5 can view any available commercial information about the hotel of his choice. To this end, the host server 24 may request information from the hotel management server 33 (arrow 201) via a network connection. Once the guest 5 has made his/her final choice, the host server 24 will communicate with the respective hotel management server 33 (e.g. with the hotel reservation application) to finalize and confirm the reservation (also called "booking"). All information about the reservation (referred to as "reservation data") is also stored in the guest profile database 25, e.g. in the third database 23 thereof. The host server 24 will then send, at an appropriate moment in time, all relevant information about the guest 5, in particular the "user data" and the "biometric data", and "reservation data" (comprising e.g. start data, end data, number of reserved rooms, number of persons accompanying the guest, etc), to one or more kiosks 4, as indicated by arrow 202, for example immediately or shortly after making the reservation. From that moment on, the kiosk 4 is ready to process the guest 5, when he arrives at the kiosk 4, in a stand-alone way, as will be described further.

### SELF CHECK-IN:

FIG. 4 illustrates the process of self-check-in. Upon arrival of the guest 5 in the hotel 7 for which the guest 5 has made a lodging reservation via the host server system 2, the guest 5 can walk straight to the kiosk 4 to check-in. The kiosk 4 will check the identity of the individual by using the technology of biometric identification (arrow 301). The kiosk 4 may e.g. retrieve a facial picture of the guest 5 via the identification module 42, and search in the kiosk database 41 to find a match. Matching algorithms are known in the art, and need not be explained in detail here. Other biometric data may, however, also be used, such as e.g. a retina-scan, or a fingerprint, or voice recognition, or any other known biometric identification technique. By using the kiosk 4, the guest 5 does not have to line-up at the front desk 32, and does not need to have a conversation with the front desk personnel, etc, and can thus save considerable time. By using biometric data for the identification, additional time may be saved, because the guest 5 does not have to search a printed reservation confirmation form, or a credit card, etc. In addition, security can be increased by guaranteeing that the person presenting himself at the kiosk 4 corresponds to the biometric data in the kiosk database 41. If a document or a credit card were used as identification, such document or card could have been stolen, and access would be given to a false person.

When the identification of the individual 5 is accepted (i.e. a match is found amongst the persons that made a reservation for a stay in that hotel 7a on that date), the kiosk 4 will inform (arrow 302) the hotel management server 33 of the arrival of the guest 5, and may provide a welcome message to the guest 5, e.g. through a speaker (not shown), or via a screen 44, or other output means. The welcome message may be highly personalized, as will be described further in relation to FIG. 5 and FIG. 6. The hotel management server 33 will then send (arrow 302) all applicable information to the kiosk 4 necessary to complete a room assignment (i.e. all relevant information so that the kiosk 4 can allocate a room number). Alternatively the hotel management server 33 assigns a room for the guest 5, and provides the room number to the kiosk 4. The kiosk 4 will inform the guest 5 of the assigned room-number, e.g. via the screen 44, or via a printed paper provided by means of a printer module (not shown), and will activate (arrow 303) a key dispenser module 43 so as to provide the guest 5 with "a key" to the room, in particular a physical key 61. The word "physical key" is to be interpreted broadly as any physically touchable room access means. The room access means depends on the infrastructure of the hotel 7, in particular on the type of door locks, and may e.g. be a classical metal key, but may also be a magnetic or electronic card (provided with appropriate information stored thereon by the key dispenser module 43), or a pre-perforated plastic card with a unique pattern, or any other physical room access means known to the person skilled in the art. It is an advantage of the system 1 that it can work with any existing physical room access means, because in this way a huge investment for changing the hotel infrastructure can be avoided, while still offering the same benefits both to the hotel 7 (e.g. less staff) and to the guest 5 (e.g. more efficient check-in).

According to the hotel security policy and/or the local authority regulations, all or part of the "user data" and/or the "biometric information", e.g. the complete history of facial images of the guest 5, and/or history log of reservations in the hotel, can be extracted from the kiosk database 41, and/or from the hotel database 31, and/or from the guest profile database 25.

In an embodiment, e.g. depending on the country where the hotel resides, all information captured by the kiosk(s) 4 may be stored in the host database 25, and can be made available to the authorities, such as for example: (a) full history of facial images, (b) full history of other biometric data captured, such as e.g. fingerprints, (c) full history of passport scans, (d) full travel history, (e) a log from which location (IP-address) the reservation was made, (f) a log of which hotels were viewed, (g) a full log of the guest profile, (h) a full log of the web-browsing behaviour.

If required or desired, the hotel 7 may still have a reception desk (also called "front desk"), schematically represented by reference 32 in FIG. 4 and in FIG. 5, where hotel staff manually checks-in the guest 5 in a manner known in the art. It is an advantage of the system 1 that the biometric check-in can be combined with the classical check-in, for guests 5 that so require or desire.

In addition to the biometric identification module 42, the kiosk 4 may also comprise other devices for general identification of the guest 5, e.g. a credit-card-reader for reading a magnetic or electronic card, such as a payment-card. Alternatively or in combination thereto the kiosk may have an identity-card reader or passport reader or passport scanner, e.g. the electronic information stored on the passport, or printed on the passport. That information may also be used to identify the guest 5, albeit with a lower degree of safety, because in fact a match is determined between user data (corresponding to data in the Guest profile database 25) and the physical passport, not necessarily between the physical person and the user data. The kiosk 4 may also be able to compare the passport photo with the information extracted from the facial recognition system. However, this is only required if the biometric recognition fails, or in case of increased security (e.g. when an increased state of security is required), e.g. when a very important person (VIP) is also visiting the hotel 7a. In an embodiment, the passport reader may be adapted for performing one or more of the following functions: (a) to read all digital information, (b) to read all printed text, (c) to compare the printed text and digital info, (d) to compare printed photo with the digitized photo data stored on the passport, (e) to allow OVD (Optical Variable Device e.g. hologram) visualization, (f) to scan the passport with different kind of light sources (visible light, UV light, ...) so as to read visible and non-visible information, (g) to scan a 1D or 2D barcode, (h) for IPI (Invisible Personal Information) decoding, invisible (by eye) information, encoded into photo. In embodiments, the kiosk may be adapted to compare the passport photo with a photo from the biometric database. The passport reader and/or the kiosk may then be adapted for detecting and reporting any manifest inconsistencies. In this way, security is further increased.

Part, or preferably all, of the biometric data obtained by the identification module 42 during check-in or during later encounters, may be sent back to the host server 24, e.g. immediately after capture or later, e.g. in batch processing overnight, or e.g. after check-out of the guest 5 (as will be described further). Since the "user data" and "biometric data" remains available on the host database 25, even after the stay in the hotel 7, there is no need for the kiosk 4 and/or the hotel management system 3 to archive this data too. During a next stay, updated user data and biometric data will be sent by the host server 24, along with the reservation data.

### DATABASE MARKETING:

Referring now to FIG. 5 and FIG. 6, in an embodiment, the kiosk 4 can further comprise an information selection and presentation engine (ISPE) 47, and a guest categorization engine (GCE) 48. Preferably the hotel management server 33 then comprises a configuration tool (AST) 34. These "modules" or "tools" or "engines" may be e.g. software modules, which can be used as an additional benefit of the system 1 of the present invention, so that the kiosk 4 can also be used as a device for automatically providing highly relevant and highly personalized information, and/or as a database marketing tool for offering additional (up-sales) information and services to the guest 5. In order to communicate with the guest 5, the kiosk 4 may use output means such as e.g. a screen 44, for presenting the personalized information to the guest, and input means such as e.g. a keyboard 45 or a touch screen (not shown), for allowing the guest 5 to interact with the kiosk 4, e.g. for making a selection between information items, for accepting an offer or discount or up-grade, for requesting more detailed information, etc. According to aspects of the present invention, the layout and the content of this personalized information is generated automatically or semiautomatically by an information selection and presentation engine (ISPE) 47 running on the kiosk 4.

The information selection and presentation engine (ISPE) 47 may use several information sources, such as e.g. one or a combination of the following sources (the list not being limited):
1) non-private user data, also referred to as normal reservation data, such as e.g. age of the guest). This data comes from the user data database 21;
2) hotel customer relation (CRM) information (e.g. typical or average spending w.r.t. the mini-bar during previous visits, does the guest usually take dinner in the hotel). This data comes from the local hotel CRM system, and is not available to other parties of the system, such as other hotels;
3) private guest information (e.g. average duration of previous visits). This information comes from the guest profile database 25, is private and is sent through the system in an encrypted way. The guest categorization engine 48 may have a special dedicated analysis block able to decrypt and process this information (e.g. by means of rules, see further), without disclosing the personal data as such. The outcome of the analysis block can be used by other functional blocks. In this way this information can be used without making private information public;
4) hotel options selling and availability information, e.g. information obtained from the hotel server 33 (in particular from the CRM). It typical contains information on options, preferences, prices, and in fact all information located in the hotel CRM;
5) external information. Trough this interface any third party system (e.g. local hairdresser, local golf club, etc) will be able to make information available (e.g. promotions);
6) external time dependent information (e.g. weather forecast). This information is typically gathered from different systems URL's or from other websites.

According to an aspect of embodiments of the present invention, the information selection and presentation engine (ISPE) 47 processes (e.g. filters, arranges, etc.) data from the information sources automatically, based on a predefined configuration, which may be adapted by a configuration tool 34 (herein also referred to as "Advertising Studio", abbreviated as AST) which may run e.g. on the hotel management server 33. By using the configuration tool (AST), 34 the hotel manager (or staff) can e.g. add or modify or delete functions (or rules) for determining the "guest type", based on e.g. logical functions (e.g. Boolean e.g. AND, OR, NOT, and/or conditional statements, e.g. "if ... then ... else ...") and/or mathematical combinations of the content of fields selected from the hotel CRM database (including reservation data), and/or the content of the fields in the host database 25 (e.g. user data and preference fields), some of which data may be internally decrypted inside the ISPE and/or the GCE. And for each "guest type" (herein also referred to as "guest category") the hotel manager (or staff) can define or modify a corresponding screen-template, comprising a plurality of visual elements (e.g. text boxes, graphical boxes, pull-down-lists, etc) arranged in a particular way, the content of which elements is to be filled automatically by the information selection and presentation engine (ISPE) 47, and the properties of which elements (e.g. visibility) may be automatically adjusted depending on the content of certain fields.

By using the configuration tool (AST), 34 the hotel management can fine-tune the check-in information or advertising information which will be shown to the guest 5 at check-in, without in-depth knowledge of computer technology. By simple "drag and drop" of graphical building blocks, the tool allows to create a very powerful interface to dynamically create advertising screens that can be tailored to the guest checking in (e.g. to a category of guests, or even to one very specific guest). The guest will be targeted with screen, presentations and selection menus that are especially adapted to the particular guest on the particular reservation. In this way the guest 5 is facing well determined information for up selling, special actions and more. Some advantages of this tool are:
- no IT support required, straight forward and easy to use building blocks and information pipes;
- graphical building drag and drop interface;
- dynamic guest profile categorization engine, create your own guest categories using your own criteria;
- easy to use wizards and example templates;
- categorize, analyze, measure, prioritize, score, qualify, filter all the information you have, build and enrich your selling screens and presentations the way you think;
- use the result to present your guest with flattering and adapted screens (e.g. on the guest's birthday);
- use of templates and drag and drop elements lets you build well enriched and brand consistent screens without in-depth knowledge of IT or graphical layout.

The possibilities of the system are only limited by the creativity of the hotel manager and his staff. The strength of this product is that it can be automated by simply using the data made available, and by changing the properties of some practical pre-defined graphical building blocks. This will drive the fully automated information selection and presentation engine (ISPE) 47. With a few clicks the professional presentation is ready.

### DETAILED EXAMPLE:

The following example will illustrate why a dynamic guest categorization is required, and why a guest 5 cannot by categorized in a static way using only personal user data, or using only reservation data. To achieve good results, data from several sources (e.g. several databases) needs to be combined in a clever way. Once the guest 5 is categorized in the most appropriate category for that particular stay in the hotel 7, the information presented to him/her can be generated automatically. A specific example will clarify this.

Suppose in a first situation, that the private information analysis block determines that Mr. Smith is a frequent traveller for short periods, travelling typically on working days. He is between 40 and 50 years old, and has a typical management function in an average-size company. Based on this information, Mr. Smith can be categorized in the class of "business traveller with above average budget". In this case, the Information selection and presentation engine (ISPE) 47 could generate a standard login-screen on the kiosk 4 at check-in, without any fancy options, or redundant information. If Mr. Smith is travelling alone and has a reservation for a few working days, the classification of "business travel" is probable correct. After hours of travel and delays he will probably love a simple and straightforward login screen. Nevertheless he will still have the possibilities to go through a list of other options of his choice. In this case indeed a standard login-screen would be most appropriate.

However, if the same Mr. Smith has a reservation for one room and two adult persons and he has a reservation from Thursday to Sunday, he would be categorized as "business travel with partner, extending his stay for pleasure". This category would imply a different welcome presentation. Indeed, during the business meetings (on working days) his wife will probably be free and would probably like to enjoy her stay in the hotel and surroundings. Therefore, his wife may be interested in e.g. beauty farm, hairdressing, etc. Including information fields indicating that the couple has made a reservation for the theatre, will further amplify the probability that his wife will be interested in the nearby hairdressing saloon. The manager of the hairdressing saloon is interested in potential customers from a social level, and might be willing to pay for advertising his saloon. In such a case, the information of the hairdressing saloon could be placed on top, or in front of other less relevant information for this guest category.

Suppose furthermore that the Information selection and presentation engine 47 knows that the couple is staying for the weekend, and suppose that the hotel 7 has a nice golf course. In that case the hotel manager could use a filter on the private information to detect whether Mr. Smith might be interested in a reservation for the golf course. Suppose on the other hand that the Information selection and presentation engine 47 knows that the weather forecast for the weekend is rainy, it may inform the couple of a nearby indoor tennis facility. Or as the couple has a social level, they may be more interested in the theatre. The wife being of a social level may be interested in the "paint art gallery" which is presenting at the same weekend ("presentation depending on time element"), and so on. Thus, by filtering, selecting and/or combining personal data, and/or reservation data, and/or event information, and/or external information, the information selection and presentation engine (ISPE) 47 can provide highly relevant and highly personalized information, which process can be fine-tuned by using the configuration tool 34.

Moreover, the hotel manager can make a very special offer for Mr. Smith, which his wife would surely appreciate. Assume e.g. that Mr. Smith has made a reservation for a standard room for the weekend, and assume that during that particular weekend, a lot of luxury rooms are not reserved. By using an appropriate private information filter, the Information selection and presentation engine 47 would know that Mr. Smith is a regular visitor of this hotel when he is travelling alone on a business trip. In this example the hotel manager could make a special offer for Mr. and Mrs. Smith, by providing the option of upgrading the room for a small extra fee, or maybe even for free (e.g. depending on the number of luxury rooms still available). By making this special offer, he would create a strong customer binding between the guest 5 and the hotel 7a, as his wife would probably be very pleased with the luxury room, especially during the long meeting hours of her husband.

All of these examples can be implemented by defining an appropriate function (or rule) using the relevant data-fields, and by defining an appropriate relationship (e.g. Boolean, mathematical, etc). It is mentioned again that the private data of the guest need not be made available, only the output of the function, which is a combination of several fields. In this way, privacy of the guest may be guaranteed.

As another example, if the same Mr. Smith has a reservation for a longer period (e.g. two weeks) with his wife and two children (which are both below the age of ten), the category of the guest would change to yet another category with different interests. In this case Mr. Smith would properly be categorized in the category of "Father travelling with his family". So in this case the information selection and presentation engine (ISPE) 47 would present a totally different presentation screen during check-in at the kiosk 4, as the family may be more interested in some external facilities (fast food, carting track, shopping mall, visit to the local zoo, spending time in amusement park, etc). Thus other functions (or rules) need to be used to detect this condition, and other content would be selected, and it would be arranged and presented in a different manner to the guest 5.

In an embodiment of the kiosk 4, the kiosk could further comprise a ticket dispenser module 43 for providing (arrow 304) e.g. entry tickets 62 for the zoo, or to provide a family ticket 62 for two consecutive days in the amusement park, optionally at a discount, etc. Depending on the selection made (in this example: zoo or amusement park), either the paper ticket dispenser or the magnetic ticket dispenser would be activated. Depending on the guest's preference and/or credentials, the costs for the ticket may even be charged via the hotel bill, or may be pre-paid at the hotel kiosk 4 via a banking-card-terminal. In this way, the family would not have to line-up at the gate of the zoo or the amusement park, but could immediate go to the "fast-gate", and present their ticket. Depending on the selected facility, the entry tickets 62 may be e.g. paper tickets with a barcode-label, or magnetic strip cards with access information, or any other kind of "entry ticket".

It should be clear from the examples above, that the information selection and presentation engine (ISPE) 47 will present totally different information screens to the guests 5, not only by filtering and/or arranging the selected content, based on user interests and preferences as can be derived from the guest profile database 25, but also by using different screen layouts, based on the guest categorization, which is determined by means of logical (Boolean) and/or mathematical formulas (such as e.g. "(age-field > 30) AND (age-field < 40) AND (number_of_rooms = 1) AND (number_of_accompanying_persons) = 0").

FIG. 6 schematically shows how the kiosk 4 may be used for providing relevant and personalized information to the guest 5, e.g. for database marketing purposes. Thereto, the kiosk 4 may comprise an Information selection and presentation engine 47 for selecting, organizing and displaying information, customized to the guest 5 and/or any accompanying person(s). The information may be derived from many different sources, such as "user data" originating from the first database 21 of the host server, or "user preferences" originating from the third database 23 of the host server, or "reservation data" originating from the host server and/or the hotel CRM system, or "preferences" (e.g. restaurant or mini-bar preferences) from the hotel database 31, or general information (e.g. weather forecast) e.g. from the internet or from a manual input, or other information (e.g. opening hours) from other facilities (e.g. sports centre, beauty farm, hairdresser saloon, etc). First a "guest category" is determined, based on a set of rules (or functions, criteria), which are stored in the guest categorization database 410. These rules may be e.g. collections of Boolean and/or mathematical operators to work on certain fields from the database records corresponding to the reservation data and/or the personal user data. The rules may be prioritized or arranged such that when the first rule is satisfied, the first category is assigned to the guest, otherwise the second rule is evaluated, and if the second rule is satisfied, the second guest category is assigned, etc. (known as a "nested if-then-else") Typically the last rule is a default rule, for covering all guests not belonging to any of the specific guest categories. A fictitious example of a first rule for illustration purposes only, could be something like: "if (duration_reservation = 1 day) AND (kind_of_day = working_day) AND (guest_age > 30) AND (guest_age < 50) then guest_category is "business_trip". The kiosk 4 may initially be loaded with a default set of rules which are the same for all hotels, but according to certain aspects of the present invention, the rules can be modified or deleted by the hotel manager (or staff), and new rules can be added, by using a configuration tool 34, herein referred to as "advertising studio", which may be a computer application with a graphical user interface. The configuration tool is specially developed to allow staff with minimal computer skills, to be able to use the tool. Optionally, the configuration tool 34 may also comprise a wizard to assist "first time users" or "inexperienced users" in creating such a rule.

If the guest categorization engine 48 (which evaluates the rules) has determined a guest category, the Information selection and presentation engine 47 fetches a corresponding template from the template database 411, and fills-out the graphical and/or textual elements of the template, thus obtaining a highly customized image of information, which is then displayed to the guest 5 via the screen 44. The same configuration tool 34 can also be used to modify the templates, or to create additional templates, or to delete existing templates, again preferably by allowing the hotel manager or staff to select predefined graphical elements, and to drag-and-drop them on an image, to allow them to be resized, coloured, etc. Optionally, the configuration tool may comprise a wizard to assist "first time users" or "inexperienced users" in creating such a template.

### SELF CHECK-OUT:

FIG. 7 illustrates the process of self check-out. At the end of the guests' stay, the kiosk 4 can also be used to process the check-out without the help of hotel staff. The process is quite similar to the check-in process at the time of arrival at the hotel, as described above. In particular, the guest 5 approaches the kiosk 4, the kiosk 4 identifies the person by using the identification module 42 (arrow 401), and searches in the kiosk database 41 to find a match. The guest 5 returns the key 61 via the key dispenser module 43 or another key acceptance module, which accepts the key (arrow 402). Optionally the guest 5 can make a payment for the stay, e.g. using a credit-card (arrow 403), but other ways of payment could also be used, e.g. pre-payment, or post-payment, or other. In order to know the total cost, the kiosk 4 may communicate with the hotel management server 33, e.g. for exchanging information such as e.g. use of the bar and/or restaurant and/or mini-bar (arrow 404). The kiosk 4 then informs the hotel management server 33 that the guest has checked-out, and the hotel management server 33 releases the room for housekeeping. The kiosk 4 may then transmit (arrow 405) all "biometric data" captured during the stay to the host server 24 (for storage in the host database 25, for later use) (if not already done so), and may then delete all "user data" and "biometric data" of the guest 5 on the kiosk database 41, or may delete this data at a later time, e.g. the next morning when the hotel management server 33 provides an update of the guests 5 staying and expected on that day. Alternatively the data may be stored for a longer time in the kiosk database 41 for security reasons. Likewise, the hotel management server 33 may delete the part or all of the data of the guest 5 which has checked-out, or may decide to keep at least part of the user data (e.g. the name, address, bank account, telephone number, etc) until the payment is effectively made.

Although not shown in a separate drawing, it is clear for the skilled person that the kiosk 4 can also be adapted for receiving the key 61 for temporarily storage, e.g. when the guest 5 temporarily leaves the hotel, e.g. by applying the same or similar steps 401 and 402 as were used during the check-out procedure. Likewise, the guest 5 can regain the key 61 from the kiosk 4 when he/she returns into the hotel 7, by using similar steps as used during the check-in procedure, except that no room is assigned, but access is provided to the same room. As for the Information selection and presentation engine, the same or other data could be provided, or in a different order, e.g. depending on the weather forecast, or special events.

Summarizing, advantages of the method and system 1 of the present invention are:
- The concept provides 100% person identification by using biometric identification, hence no other person can use the reservation of the room, or can get unauthorized access to the room.
- As the kiosk 4 is in communication with the hotel server 33 (also called hotel computer or Central Reservation System), the room number can be determined at the very last moment, i.e. the moment of arrival at the kiosk 4. Existing self-service systems must inform the guest 5 of the room number before the expected time of arrival, this is mostly before housekeeping has "released" the available rooms. The method of the present invention works the other way around: rooms are cleaned, and any room already cleaned may be provided to the guest.
- At the time of arrival of the guest, the kiosk 4 may offer a last minute (free) room upgrade or any other means of additional service.
- At the time of arrival of the guest, the kiosk 4 may offer up-sale services like (but not limited to) room upgrade for a limited or even no fee, immediate catering services, etc.
- There is no need to change the room lock system of the hotel 7a. The kiosk 4 will provide any means of existing Hotel Room Access already used at that specific hotel 7a. In some other concepts, fingerprint, sound wave or other identification systems are used at the guest's room door itself. Using such a system and method would require all door locks to be upgraded or replaced. This huge investment is mostly not acceptable, especially with large hotels and hotel chains. The system and method of the present invention requires only some minor modifications to the hotel server (e.g. only added software), and the installation of one or more kiosks 4.
- The concept of the "fast check-in" and "fast check-out" via the kiosk does not interfere with the normal (personal) way of hotel check-in and check-out at the front-desk 32. On the contrary, the guest 5 has the constant and repeated choice between self-service or human-assisted check-in.
- For hotel security or local authority purposes all information about the guests staying in the hotel can be provided, as this may be retrieved from the Guest profile database 25 via the host server 24. One of the main features for local authority security is the complete history record of the guest destinations, the biometric data, facial images of the present and the past, and passport information.

These advantages offer 1) temporal value creation (the guest saving time), 2) functional value creation (front desk efficiency, and the front desk personnel can perform other tasks, especially in a family hotel-business), 3) financial added value (hotel costs improvements), 4) emotional added value (the guest has a more pleasant experience), 5) increased safety (for the guest, as he/she can be sure that nobody else can gain access to the room, even if he/she loses his credit-card, and for the hotel and authority, because they can be sure that the person at the kiosk and in the room is the correct person, whose identity can be checked).

### GUEST SATISFACTION QUESTIONNAIRE:

Optionally the kiosk 4 can also be used to enhance the interactive relationship and loyalty marketing communication between guest 5 and hotel 7a. As just one example, a guest satisfaction questionnaire, e.g. in the form of a list of multiple-choice questions, can be presented to the guest 5, e.g. printed on a paper, or presented on-screen. The quest's answers can be automatically processed, e.g. by processing the answers input via a keyboard 45 or touch-screen (not shown), or by means of scanning a document using a document scanner, or even later, by the host server system 24. The information about customer satisfaction may also be stored in the Guest profile database 25, and can be made available to the hotel management. To this end, in embodiments of the present invention, the system 1 comprises a software module 26 for writing reviews, referred to herein as "Review Writer", abbreviated RW. This module 26 may run on the kiosk 4, or may run on the host server 24. An example of the "review writer module" 26 implemented on the host server 24 will now be described in more detail.

Referring back to FIG. 2, the host server 24 may optionally further comprise a "review writer module" 26, which may be integrated in the reservation website. It allows guests 5 to write their experience (arrow 102) about a particular hotel staying. Writing reviews on a website is known in the art for many kind of products (e.g. on-line shopping sites, or on-line download-sites), such as e.g. TripAdvisor for hotels, but as far as known to the inventors, none of them provide control on the honesty of the review writer. With existing tools, any person can write any statement or judgment he/she wants, whether it is true or not. Moreover he/she can do it complete anonymously. With such tools it is perfectly possible to write a malicious review report, even if you never even visited that hotel 7a. Such a review may cause unjust damage to the hotel reputation, which is to be avoided. In contrast, the review writer module 26 according to aspects of the present invention automatically attaches an integrity-score as an indication for the trustworthiness of the person writing the review. In order to write a review, the person logs-in into the system, using his/her account, in a similar manner as explained above (FIG. 2). The person may use a nickname on the article, so as to stay anonymous to potential readers. By using the account-data, the system 1 can identify the person writing the review, and can verify certain aspects, from which it can derive the integrity-score, which is a major advantage of a review writer module 26 integrated in the system 1. The integration is achieved by: (1) the reviewer must use his/her account to log into the system 1, (2) the reviewer has to indicate the particular lodging facility (e.g. the hotel 7a) and optionally the period of his staying (e.g. "September 2012"), either using a manual method or by simply selecting the appropriated booking out of the booking history. This guarantees that the person actually visited the hotel 7. The reviewer may enter textual data, but has to enter an overall scale of his findings. The hotel 7 will receive a copy of the article by e-mail. The hotel will receive the information on the specific booking only if the guest approves. The review writer module 26 will then check all relevant information to determine a score to the reviewer's trustworthiness (or credibility), e.g. for allowing trustworthiness-"points", depending on the outcome of certain tests. Examples of such tests may be: (a) the guest reported an issue to the hotel staff within a short time after an incident occurred during his stay, (b) the guest reported an issue using the questionnaire during check-out, (c) the guest reported an issue using the questionnaire shortly after his stay using the reservation website or a specifically designed mobile device application, (d) the guest allowed corrective action (issue solving) from the hotel staff during his stay, (e) the guest selected the option to stay anonymous, (f) the reviewer did NOT stay in the hotel during that period, (g) the reviewer allows the questionnaire and his/her answers to be published, and/or sent to the hotel management. To this end, the kiosk database 41 and/or the hotel database 31 may further comprise a database of incident data, which is sent to the host server database 25 during check-out (along with the biometric data, as described above). The "trustworthiness score" could then be calculated as a predefined function of "points" of the plurality of tests, a "point" being "1" if the test is satisfied, the "point" being "0" if the test is not satisfied. In a simple example, the trustworthiness score could be a weighted average of the sum of the "points", the weight factor being predetermined constants, depending on the content and severity of the question. In another example, the trustworthiness score could be the result of a more complicated algorithm, e.g. the outcome of a combination of mathematical and logical functions, such as e.g. "if score(test1) = 0 (i.e. the person did not say in the hotel at that time), then total_score=0 (i.e. totally unreliable review report), else total_score=sum of the individual scores, each multiplied by a predefined weighting factor)", but other functions are also possible. The reservation website may then show all or part of the review reports along with the corresponding credibility score. Alternatively, or in combination thereto, the review reports may be ordered such that the reports with the highest credibility are shown first. The reservation website may hide reviews with a credibility score lower than a predefined threshold value.

### SUBSEQUENT RESERVATION:

Referring now to FIG. 5 and FIG. 2, it should be understood that the Guest Categorization Engine (GCE) 48 and the Information Selection and Presentation Engine (ISPE) 47 may also be integrated in the reservation system. Indeed, as the kiosk 4 sends all data that it receives from the guest 5 back to the host server 24, the host database 25 comprises at least the same data as the kiosk 4 about a certain person. When this person 5 makes another booking in the future, and selects the same hotel 7, the web-interface may use the same or related GCE 48 and ISPE 47, and optionally additional functions (/rules) for guiding the person when making his reservation, by showing personalized and relevant data while the guest makes his/her booking. In an embodiment, the hotel manager may also define the set of functions (rules) which will be used during this process.

From the above it is clear that the system described above, and in particular the interaction between and functionality of the host server 24 and the kiosk 4, is more than just the combination of a simple website where a user is provided with information about a hotel 7a, and a kiosk 4 with a screen, showing the same local events to all guests. Instead, the end-to-end system 1 according to aspects of the present invention not only provides fast reservation, and fast check-in and fast check-out facilities, with enhanced security, but at the same time the kiosk is a valuable information capture tool for the hotel manager, and a valuable information provider tool (e.g. a kind of "personal assistant") to the guest 5.

Although the invention is explained taking a hotel as a specific example of a lodging facility, the invention also works for other lodging facilities, such as e.g. a motel, or a bread and breakfast facility, etc.

It is noted that the facial image data captured by the kiosk 4 may also be used for other security-purposes, such as e.g. for hotel in-house security purposes, e.g. by comparing facial images captured and/or stored by the kiosk 4 with facial images captured by in-house video security systems. This may e.g. be used to check if certain persons are present, or try to get access to unauthorized locations.

### REFERENCES:

- 1: system
- 2: host server
- 21: first database
- 22: second database
- 23: third database
- 24: host server
- 25: host database
- 26: review writer module
- 3: hotel management system
- 31: hotel database
- 32: front desk
- 33: hotel management server
- 34: Configuration Tool
- 4: kiosk
- 41: kiosk database
- 42: identification module
- 43: key dispenser module
- 44: screen
- 45: keyboard
- 46: Ticket Dispenser Module
- 47: Information Selection and Presentation Engine
- 48: Guest Categorization Engine
- 410: classification database
- 411: template database
- 5: guest
- 61: key
- 62: ticket
- 7: hotel

## Claims

1. A system (1) for allowing a guest (5) to make a lodging reservation for staying during a selected period in a lodging facility (7), and for automatically assigning a room and providing a key (61) to the assigned room, and for automatically providing personalized information, the system (1) comprising:
- a host server (24) adapted to host a web-site for allowing the guest (5) to create an account, and adapted for receiving user data and biometric data from the guest (5), and comprising a first database (21) for storing the user data, and a second database (22) for storing the biometric data of the guest, the host server (24) being adapted for allowing a user with a pre-stored account, to select a hotel (7), and to make a lodging reservation in that hotel (7) for the selected period thereby creating reservation data, the host server (24) being adapted for transmitting the reservation data to a hotel management server (33) of the selected hotel (7), and for transmitting the user data and the biometric data of the guest (5) to a kiosk (4) connected to the hotel management server (33);
- the kiosk (4) comprising a kiosk database (41) for storing the user data and the biometric data of the guest (5), and comprising an identification module (42) for capturing biometric identification data, and comprising a processor adapted with a program for finding a match between the captured biometric identification data and the biometric data of one of the guests (5) stored in the kiosk database (41), and for selecting a room number corresponding to the guest's reservation, and comprising a key dispenser module (43) for providing a key (61) of the selected room;
wherein:
- the kiosk (4) further comprises a guest categorization engine (35) for determining a guest category for the identified guest (5), based on his user data and his reservation data;
- the kiosk (4) further comprises an information selection and presentation engine (47) for selecting and presenting information to the identified guest (5), based upon the determined guest categorization.

2. The system (1) according to claim 1, wherein the kiosk is adapted for assigning a room number when the guest (5) arrives at the kiosk for the first time during the selected period, and for providing the same room number any subsequent time during the selected period.

3. The system (1) according to any of the previous claims, wherein the kiosk (4) is further adapted for storing all biometric data captured by the identification module (42) in the kiosk database (41).

4. The system (1) according to any of the previous claims, wherein the kiosk (4) is adapted for sending biometric data captured by the identification module (42) to the host server (24), and wherein the host server is adapted for processing and/or storing the biometric data in the second database (22).

5. The system (1) according to any of the previous claims, wherein the guest categorization engine (47) is adapted for determining the category to the guest (5) based on a first set of functions, each function being a combination of mathematical and/or logical operations acted upon predetermined fields of the user data and/or the reservation data.

6. The system (1) according to any of the previous claims, wherein the information selection and presentation engine is based a second set of functions for selecting information from available sources, each second set of functions being a combination of mathematical and/or logical operations acted upon predetermined fields of the user data and/or the reservation data, and based on the use of templates to organize the selected information on a screen.

7. The system (1) according to any of the previous claims, wherein the hotel database (31) or the kiosk database (41) further comprises incident data, and wherein the hotel server (33) is adapted for sending the incident data to the host server (24), and wherein the host server (24) further comprises a review writer module (26) adapted for allowing the guest (5) to write a review about his stay in the hotel (7) and adapted for assigning a trustworthiness score to the review written by the guest (5) based on a predefined function of the incident data and/or reservation data.

8. A method for allowing a guest (5) to make a lodging reservation for staying in a lodging facility (7), during a selected period, and for automatically assigning a room, and for automatically providing a key (6) to the assigned room during the selected period, the method comprising the following steps:
1) providing a web-site hosted on a host server (24) for allowing the guest (5) to create an account on the host server (24), retrieving user data and biometric data from the guest (5), and storing the user data and the biometric data in a first resp. second database (21, 22) connected to the host server (24);
2) providing the web-site for allowing a guest (5) with a pre-stored account, to select a hotel (7), and to make a lodging reservation in that hotel (7) for the selected period;
3) when a reservation is made, transmitting the user data and biometric data of the guest (5) to a hotel management server (33) of the selected hotel (7);
4) the hotel management server (33) receiving the lodging reservation and the user data;
5) providing the user data and biometric data to at least one kiosk (4), the kiosk (4) storing the user data and the biometric data of the guest (5) in a kiosk database (41);
6) the kiosk (4) retrieving biometric identification data from an identification module (42) when the guest (5) arrives at the kiosk, and searching in the kiosk database (41) for a guest (5) whose biometric data matches the retrieved biometric data, and if a match is found, selecting a room number corresponding to the guest's reservation, and controlling a key dispenser module (43) to provide a key (6) to the assigned room;
7) the kiosk (4) determining a guest category for the identified guest (5) based on his user data and his reservation data, and selecting and presenting information to the identified guest (5), based on the determined guest category.

9. The method according to claim 8, wherein selecting a room number corresponding to the guest's reservation comprises assigning a room number when the guest (5) arrives at the kiosk (4) for the first time during the selected period, and for providing the same room number any subsequent time during the selected period.

10. The method according to any of claims 8 or 9, further comprising the step of storing all biometric data captured by the identification module (42) in the kiosk database (41).

11. The method according to any of claims 8 to 10, wherein the host server (24) maintains a history log in a third database (23), the history log comprising at least one of the history of reservations made by the guest, the history of the guest's profile changes, the history of the guest's reservation options, the history of the guest's external reservations.

12. The method according to any of claims 8 to 11, wherein the kiosk (4) sends biometric data captured by the identification module (42) to the host server (24), and wherein the host server processes and/or stores the biometric data in the second database (22).

13. The method according to any of claims 8 to 12, wherein the step of determining a guest category comprises evaluating a first set of functions, each function being a combination of mathematical and/or logical operations acted upon predetermined fields of the user data and/or the reservation data.

14. The method according to any of claims 8 to 13, wherein the step of selecting and presenting information comprises evaluating a second set of functions for selecting information from available sources, each second set of functions being a combination of mathematical and/or logical operations acted upon predetermined fields of the user data and/or the reservation data, and using templates to organize the selected information on a screen.

15. The method according to any of claims 8 to 14, further comprising providing incident data to the hotel database (31) or the kiosk database (41), sending the incident data to the host server (24), allowing the guest (5) to write a review about his stay in the hotel (7) and assigning a trustworthiness score to the review written by the guest (5) based on a predefined function of the incident data and/or reservation data.
